# EUROPEAN PATENT SPECIFICATION

(11) **EP 3 009 781 B1**
(45) Date of publication and mention of the grant of the patent: **29.08.2018**
(21) Application number: 15187099.5
(22) Date of filing: 28.09.2015
(51) Int. Cl.: F28F 9/02, F02C 1/05, F28D 9/00

(54) **HEAT EXCHANGER**
WÄRMETAUSCHER
ÉCHANGEUR DE CHALEUR

(30) Priority: 17.10.2014 GB 201418403; 17.10.2014 GB 201418404
(43) Date of publication of application: 20.04.2016
(73) Proprietor: Rolls-Royce Power Engineering PLC, Derby DE24 8BJ (GB)
(72) Inventor: Davies, Heather, Derby, Derbyshire DE24 8BJ (GB); Pilatis, Nickolaos, Derby, Derbyshire DE24 8BJ (GB); Robertson, Daniel, Derby, Derbyshire DE24 8BJ (GB); Walton, Daniel, Derby, Derbyshire DE24 8BJ (GB); Tsang, Guan-Wei, Derby, Derbyshire DE24 8BJ (GB); Lopez Ramirez, Susana, Derby, Derbyshire DE24 8BJ (GB)
(74) Representative: Rolls-Royce plc

(56) References cited:
- GB-A- 920 251
- JP-A- H07 159 076
- US-A- 5 069 276
- US-A- 5 775 412

## Description

### FIELD OF INVENTION

The present invention relates to a heat exchanger, in particular but not exclusively a heat exchanger for a nuclear reactor plant.

### BACKGROUND

Typically, a nuclear power plant includes a nuclear core, a heat exchanger, a turbine and a condenser. A primary fluid is circulated to the core where the primary fluid cools the core and in the process is heated. The heated primary fluid is then directed to a hot side of the heat exchanger. A secondary fluid is directed to a cold side of the heat exchanger and heat is transferred from the primary fluid to the secondary fluid. Upon exiting the heat exchanger the secondary fluid is directed to the turbine. The turbine is generally connected to a generator to generate electricity.

Generally, to deal with the heat transfer requirements of a nuclear power plant, the heat exchanger is usually of the shell and tube type. The primary or the secondary fluid may be directed through the tubes and the secondary or primary fluid may be directed around the tubes within the shell. The walls of the tubes provide a barrier to reduce the risk of the primary fluid contaminating the secondary fluid. The shell and tube heat exchangers are generally extremely large; for example in some applications the height of the heat exchanger can be around 20m.

In non-nuclear applications, other types of heat exchangers are used. For example a plate-fin type heat exchanger. An example of such a heat exchanger used in the oil and gas industry is described in WO92/15830. A plate-fin type heat exchanger includes a plurality of stacked plates having fins that define a flow path for hot and cold fluid. Generally, the heat exchanger will be arranged so that the flow of hot fluid is adjacent (but separated by a plate) to the flow of cold fluid for optimal heat transfer.

JPH07159076 relates to a diffuser and flow straightening plate for exhaust gas. GB920251 relates to plate type heat exchangers having corrugated plates located between pairs of plates or sheets.

### SUMMARY OF INVENTION

The present invention seeks to provide a more compact heat exchanger suitable for a nuclear power plant.
A first aspect of the disclosure provides a plate-fin heat exchanger according to claim 1.

The heat exchange modules are adjacently stacked and arranged such that the axial length of the heat exchanger is at least twice the height of the heat exchanger. The heat exchanger of the first aspect can be configured to have increased thermal duty compared to a plate-fin heat exchanger of the prior art having a similar volume. The heat exchanger of the first aspect can be configured to have a thermal duty suitable for a nuclear power plant.
The person skilled in the art understands that reference to a hot fluid refers to a fluid that is relatively hotter than the cold fluid, and reference to a cold fluid refers to a fluid that is relatively colder than the hot fluid, as is conventional in the art. Alternatively, the hot fluid may be referred to as the primary fluid and the hot fluid flow path may be referred to as the primary fluid flow path. The cold fluid may be referred to as the secondary fluid and the cold fluid flow path may be referred to as the secondary fluid flow path. Further alternatively, the hot fluid may be considered a first fluid and the cold fluid may be considered a second fluid, the first fluid being hotter than the second fluid.
Reference to low pressure and high pressure refers to the relative pressure of the hot and cold fluids. By way of example only, the low pressure fluid may be at approximately atmospheric pressure and the high pressure fluid may be at a pressure greater than or equal to 100 bar, for example greater than or equal to 150 bar, for example between 150 bar and 200 bar.
Each manifold may extend from one axial end of the heat exchanger to the opposite axial end of the heat exchanger so as to connect to each of the corresponding plurality of hot or cold fluid flow paths.
The provision of two inlets and two outlets has been found to improve the distribution of hot fluid in the heat exchanger which in turn can improve the thermal duty of the heat exchanger. The provision of two inlets and two outlets has been found to be particularly beneficial when the length of the heat exchanger is greater than or equal to two times the height of the heat exchanger.
The entry and exit manifolds may include a plurality of openings along the length thereof and aligned with the corresponding plurality of hot or cold fluid flow paths.
One inlet may be at an axial end of the first entry manifold and the other inlet may be at the opposite axial end of the first entry manifold.
One outlet may be at an axial end of the first exit manifold and the other outlet may be at the opposite axial end of the first exit manifold.
The second entry manifold may comprise a single inlet through which cold fluid can enter the second entry manifold. The second exit manifold may comprise a single outlet through which the cold fluid can exit the second exit manifold.
The inlet of the second entry manifold and the outlet of the second exit manifold may be provided on the same axial end of the heat exchanger.
The axial end of the second entry manifold opposite the inlet may be capped. The axial end of the second exit manifold opposite the outlet may be capped.
The cross sectional area of the second inlet manifold may be larger than the cross sectional area of the first inlet manifold. The cross sectional area of the second outlet manifold may be larger than the cross sectional area of the first outlet manifold.
The axial length of the heat exchanger may be equal to or between two and four times the height of the heat exchanger. The axial length of the heat exchanger is at least four times the width of the heat exchanger. The heat exchanger may comprise equal to or more than 10 modules, for example equal to or more than 15 modules or equal to or more than 18 modules. Each module may comprise 15 to 30 cold fluid flow paths and 15 to 30 hot fluid flow paths.
Each entry and exit manifold may be accommodated partially within a region defined by the modules and extends partially outside a region defined by the modules.

For example, each manifold may comprise a recess in each corner that is shaped and dimensioned to accommodate a portion of the manifold.

The entry manifolds may be positioned in an upper region of the heat exchanger and the exit manifold may be positioned in a lower region of the heat exchanger. The first entry manifold may be positioned in one corner of the modules and the first outlet manifold may be positioned in a corner diagonally opposite the first entry manifold. The second entry manifold may be positioned in one corner of the modules and the second outlet manifold may be positioned in a corner diagonally opposite the entry manifold.

The entry and exit manifolds may define a cylindrical tube.

The modules may comprise a recess in each corner thereof for partially accommodating one of the manifolds, such that a portion of each manifold is accommodated within a region defined by the modules and a portion of each manifold is outside a region defined by the modules.

An aspect of the disclosure provides a nuclear reactor fin-plate heat exchanger according to the first aspect for use in a sodium fast reactor plant.

The inventors have gone against the prejudice in the art and designed a fin-plate type heat exchanger of transferring heat from a hot (or primary) fluid to a cold (or secondary) fluid in a nuclear power plant.

An aspect of the disclosure provides a use of the heat exchanger according to the first aspect, wherein the hot low pressure fluid is liquid sodium and the cold high pressure fluid is nitrogen gas.

An aspect of the disclosure provides a nuclear reactor plant comprising the heat exchanger according to the first aspect.

### DESCRIPTION OF DRAWINGS

The invention will now be described, by way of example only, with reference to the accompanying drawings in which:
Figure 1 illustrates a schematic of a sodium fast reactor nuclear power plant;
Figure 2 illustrates a perspective view of a heat exchanger suitable for use in the nuclear power plant of Figure 1;
Figures 3 and 4 illustrate end views of the heat exchanger of Figure 2;
Figure 5 illustrates a perspective view of two modules of the heat exchanger of Figure 2;
Figure 6 illustrates a perspective view of two modules and a manifold of the heat exchanger of Figure 2;
Figure 7 illustrates a cross sectional view through a plate-fin arrangement of a module of Figure 6;
Figures 8 illustrate a fluid flow path of hot fluid through a plate-fin arrangement of Figure 7; and
Figure 9 illustrates a fluid flow path of cold fluid through a plate-fin arrangement of Figure 7.

### DETAILED DESCRIPTION

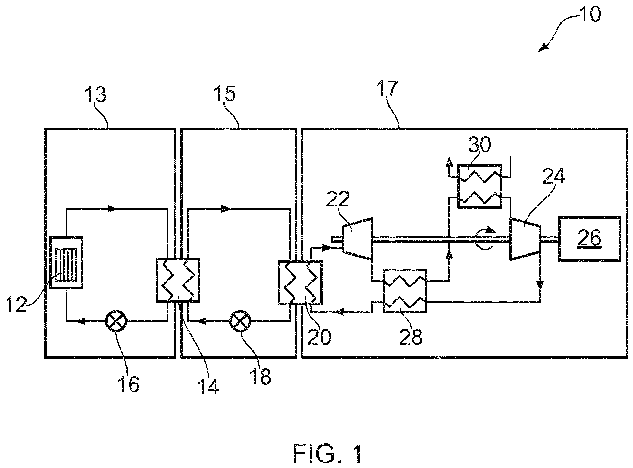

Referring to Figure 1, a sodium fast reactor plant is indicated generally at 10. The reactor plant includes a first sodium circuit 13, a second sodium circuit 15 and a nitrogen gas cycle 17. The first sodium circuit 13 includes a reactor core where heat energy is generated. A first flow of liquid sodium is circulated to the core for cooling. In the cooling process the liquid sodium is heated. The first flow of liquid sodium is then circulated from the core to a first heat exchanger 14 before being circulated back to the core. The liquid sodium is circulated around the first sodium circuit by a pump 16.

The second sodium circuit 15 includes a second flow of liquid sodium. The second flow of liquid sodium is circulated to the first heat exchanger 14 where heat is transferred from the first flow of liquid sodium to the second flow of liquid sodium. The second flow of liquid sodium then flows to a second or intermediate heat exchanger 20 before being circulated back to the first heat exchanger. The second flow of liquid sodium is circulated around the second sodium circuit by a pump 18.

The nitrogen gas cycle 17 includes a flow of nitrogen gas. The nitrogen gas is circulated to the intermediate heat exchanger 20 where heat is transferred from the second flow of liquid sodium to the nitrogen. Nitrogen then flows from the heat exchanger to a turbine 22. The turbine 22 is connected to a compressor 24 and an electrical generator 26. Nitrogen gas flows from the turbine 22 to a recuperator 28, then to a heat sink 30, before being directed to the compressor 24. The nitrogen gas flows from the compressor to the recuperator where the nitrogen gas is pre-heated before being directed to the intermediate heat exchanger 20. In this way electricity can be generated from a nuclear core.

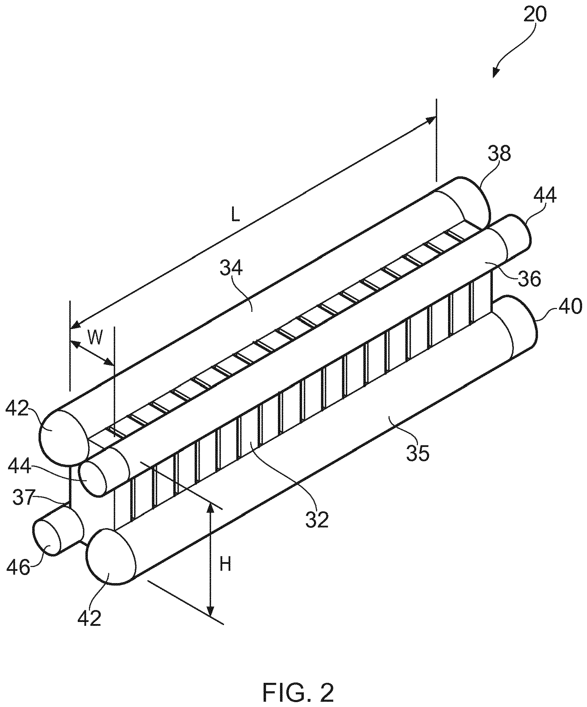

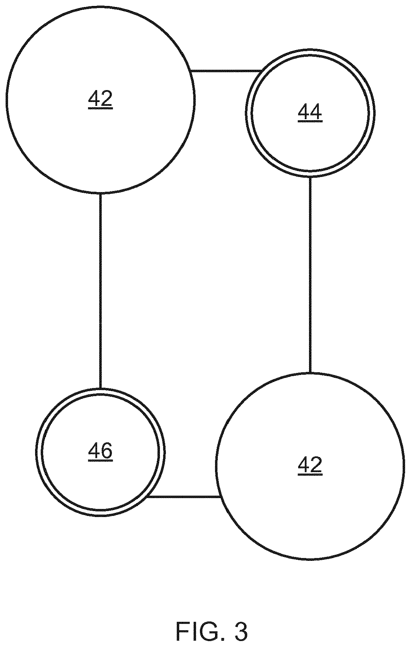

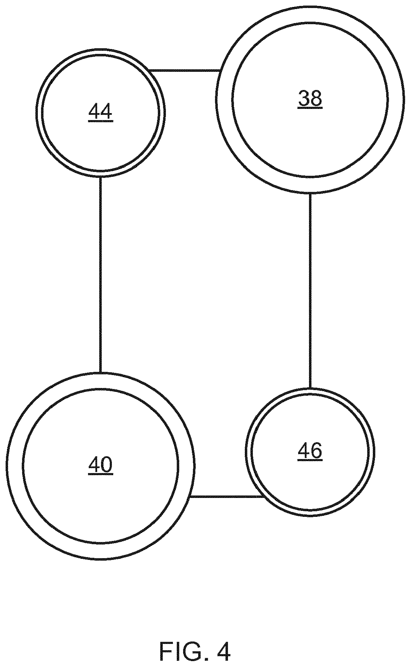

The heat exchanger 20 will now be described in more detail with reference to Figures 2 to 9.

The heat exchanger 20 is a plate-fin heat exchanger. The heat exchanger includes a plurality of heat exchange modules 32. The heat exchange modules are linearly arranged adjacent each other. Each heat exchanger module is axially aligned with a neighbouring heat exchange module.

In the present embodiment, each heat exchange module has a height H greater than the width W. In the present embodiment the height H is 1.2 to 1.6 times the width W. The heat exchange modules are dimensioned and stacked such that the longitudinal length L of the heat exchanger 20 is 3 to 5 times the width W of the heat exchange modules. In the present embodiment 18 modules are provided, but any suitable number may be provided. Furthermore, different ratios of height H, width W and length L may be provided than those described for the present embodiment.

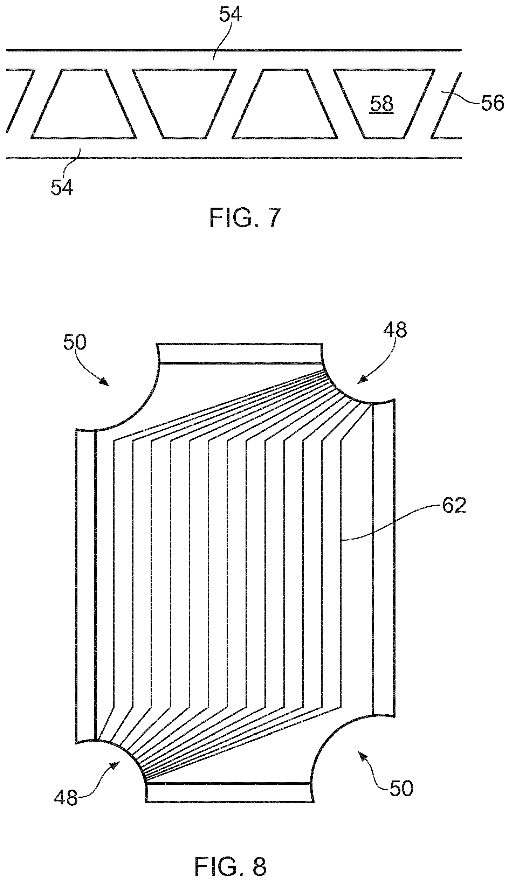

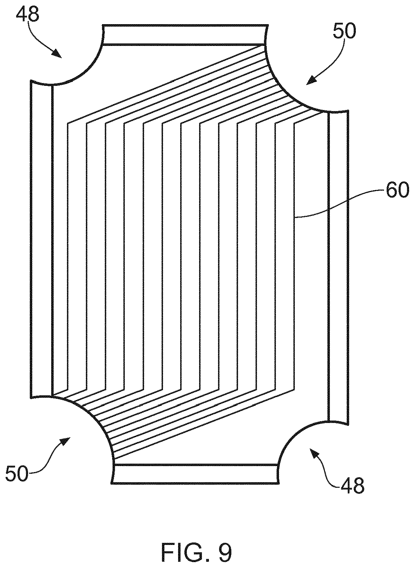

As shown most clearly in Figures 8 and 9, each heat exchange module defines a plurality of hot fluid flow paths 62 and a plurality of cold fluid flow paths 60. The liquid sodium (which may be referred to as the primary fluid) is circulated along the hot fluid flow paths and the nitrogen gas (which may be referred to as the secondary fluid) is circulated along the cold fluid flow paths. The fluid flow paths will be described in more detail later.

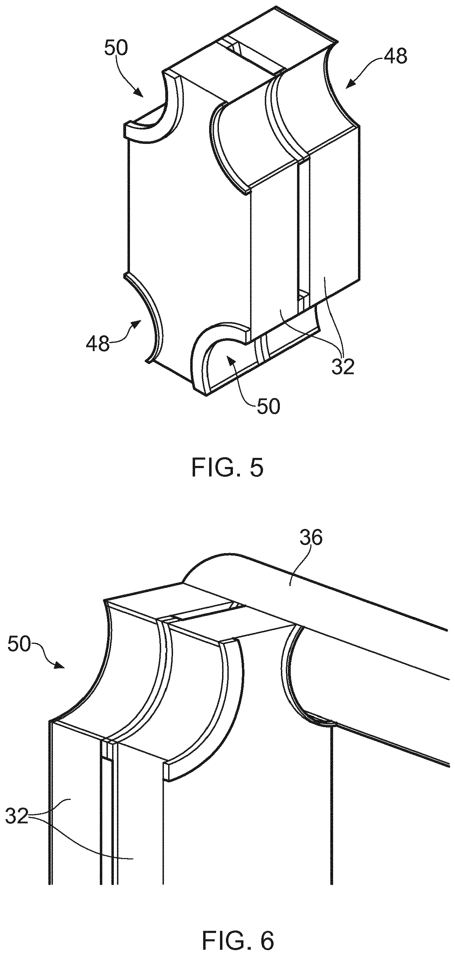

Referring in particular to Figures 5 and 6, each module 32 has a corner recess or cut-in 48, 50 so as to accommodate a portion of a manifold 34, 35, 36 or 37. In the present embodiment the cross section of each manifold is circular so the recesses are a circular segment shape. As will be understood later with respect to the description of the manifolds, two of the recesses 48 are larger than the other two recesses 50.

Referring now to Figures 2 to 4, manifolds 34, 35, 36, 37 are provided at each corner of the heat exchanger. Two entry manifolds 34, 36 and two exit manifolds 35, 37 are provided. The entry manifolds 34, 36 are, in use, positioned at an upper end of the heat exchanger and the exit manifolds 35, 37 are, in use, positioned at a lower end of the heat exchanger. The entry manifold for supplying the cold fluid to the cold fluid flow paths (referred to from here-on-in as the cold entry manifold 34) and the exit manifold for receiving the cold fluid from the cold fluid flow paths (referred to from here-on-in as the cold exit manifold 37) are at diagonally opposing corners. The entry manifold for supplying the hot fluid to the hot fluid flow paths (referred to from here-on-in as the hot entry manifold 36) and the exit manifold for receiving the hot fluid from the hot fluid flow paths (referred to from here-on-in as the hot exit manifold 35) are at diagonally opposing corners.

The manifolds 34, 35, 36 and 37 are elongate and extend from one axial end of the heat exchanger 20 to the opposing axial end of the heat exchanger 20. In the present embodiment the manifolds have a circular cross-section, e.g. they can be considered to be substantially cylindrical tubes. However, in alternative embodiments the manifolds may have any other suitable cross section, e.g. oval. The cold entry manifold 34 and the cold exit manifold 37 have a similar or equal diameter, and the hot entry manifold 36 and the hot exit manifold 35 have a similar or equal diameter. The cold entry and exit manifolds have a larger cross section (e.g. a greater diameter) than the hot entry and exit manifolds.

The entry and exit manifolds 34, 35, 36 and 37 include a plurality of openings along the length thereof that are arranged to align with the corresponding fluid flow path so that the entry and exit manifolds are in fluid communication with the corresponding cold or hot fluid flow paths 60, 62.

The cold entry manifold 34 includes a single inlet 38 and the cold exit manifold 35 includes a single outlet 40. The inlet 38 and the outlet 40 of the cold manifolds are provided at one axial end of the manifold and are provided on the same axial face of the heat exchanger. The opposite axial ends of the cold manifolds are closed off by a cap 42. In alternative embodiments the inlet and the outlet may be provided at opposite axial ends of the heat exchanger or provided at a position along the longitudinal length of the manifold.

The hot entry manifold 36 includes two inlets 44 and the hot exit manifold 37 includes two outlets 46. The inlets 44 and the outlets 46 are provided at the axial ends of the manifold, e.g. on the axial end faces of the heat exchanger. However, in alternative embodiments the inlets and outlets 46 may be provided at any position along the axial length of the manifold, but improved results have been found when the inlets and outlets are provided at or near the axial ends of the manifolds.

The fluid flow paths 60, 62 defined by the modules 32 are shown in more detail in Figures 7 to 9. Each cold flow path 60 flows from one of the openings in the cold inlet manifold to one of the openings in the cold outlet manifold. Each hot flow path 62 flows from one of the openings in the hot inlet manifold to one of the openings in the hot outlet manifold. The fluid flow paths are arranged so that each fluid flow path is substantially the same length.

The modules 32 include a plurality of plates 54 and fins 56. Various methods of forming fluid flow paths with plates and fins are known in the art, but one example is illustrated in Figure 7. As shown in Figure 7, plates are stacked with fins separating the plates and forming channels 58. The channels 58 define the or at least part of the fluid flow paths. In the presently described embodiment the fins are connected to the plates using diffusion bonding and the structure is formed using super plastic forming, similar to the diffusion bonding super plastic forming method described in WO92/15830 which is incorporated herein by reference.

In use, the inlets 44 of the hot entry manifold are connected to receive a flow of liquid sodium from the first heat exchanger 14 of the second sodium circuit 15, and the outlets 46 of the hot exit manifold are connected to deliver a flow of liquid sodium to the pump 18 to be circulated to the first heat exchanger 14. The inlet 38 of the cold entry manifold is connected to a flow of gaseous nitrogen from the recouperator 28 of the nitrogen gas cycle, and the outlet 40 of the cold exit manifold is connected to deliver a flow of gaseous nitrogen to the turbine 22 of the nitrogen gas cycle. By way of example only, the liquid sodium may enter the heat exchanger 20 at a temperature exceeding 520°C and at approximately atmospheric pressure. The liquid sodium may exit the heat exchanger 20 at a temperature below 400°C and at approximately atmospheric pressure. The gaseous nitrogen may enter the heat exchanger 20 at a temperature below 370°C and a pressure above 150 bar. The gaseous nitrogen may exit the heat exchanger 20 at a temperature above 500°C and at a pressure above 150 bar.

The described heat exchanger has been found to provide an increased thermal duty compared to plate-fin heat exchangers of the prior art. The described heat exchanger occupies a smaller volume for a given thermal density than a U-tubed heat exchanger of the prior art.

Several arrangements of heat exchangers were tested to review the benefit of having two inlets and two outlets on the hot fluid manifolds. Firstly, a similar arrangement of heat exchanger as shown in Figure 2 was used, but only one inlet was provided in the hot entry manifold and only one inlet was provided in the hot exit manifold, the inlets were positioned on the same axial end of the heat exchanger. In this arrangement there was a large flow rate at the axial end near the inlets, but this flow rate decreased towards the opposite axial end of the heat exchanger (i.e. the end without an inlet or outlet in the hot fluid manifolds). When a single inlet was provided at one axial end of the heat exchanger and a single outlet was provided at an opposite axial end of the heat exchanger, a low flow rate was seen in a region near the inlet and a high flow rate was seen in a region near the outlet. A further alternative arrangement tested was to position the inlet and the outlet mid-way between the axial ends of the heat exchanger. In this arrangement, the flow rate was high in a central region of the heat exchanger but much lower at axial ends of the heat exchanger. The described example heat exchanger with two inlets and two outlets was found to have reduced pressure losses and improved fluid distribution compared to the tested arrangements. Reduced pressure losses and improved fluid distribution can contribute to an increase in the thermal duty of the heat exchanger.

The pressure drop of the cold fluid flowing through the heat exchanger has been reduced by increasing the cross-sectional area of the cold fluid manifolds. It is particularly beneficial to reduce the pressure drop of the cold fluid because the cold fluid flows to the turbine.

The pressure drop of the fluid flow in the heat exchanger and the thermal duty of the heat exchanger has been found to be optimised by accommodating part of the manifold in a region that would otherwise be occupied by the modules and part of the manifold outside of the modules. This is contrary to prior art arrangements where the manifold is provided entirely outside the, usually rectangular modules, (known in the art as an external manifold), or the manifold is accommodated entirely within a region that would be otherwise occupied by the modules (known in the art as an internal manifold).

It will be appreciated by one skilled in the art that, where technical features have been described in association with one or more embodiments, this does not preclude the combination or replacement with features from other embodiments where this is appropriate. Furthermore, equivalent modifications and variations will be apparent to those skilled in the art from this disclosure. Accordingly, the exemplary embodiments of the invention set forth above are considered to be illustrative and not limiting.

The flow through the heat exchanger has been described as a counter-flow arrangement, but in alternative embodiments a cross-flow or co-flow arrangement may be used.

The heat exchanger has been described as being used in a sodium fast reactor, with sodium as the primary fluid and nitrogen as the secondary fluid. However, in alternative embodiments the heat exchanger may be used with an alternative reactor or in a non-nuclear application. For example, the reactor may be a sodium fast reactor having sodium as the primary fluid and water as the secondary fluid. Further alternatively, the reactor may be a pressurised water reactor, boiling water reactor, a molten salt reactor, a gas cooled reactor or an alternative type of liquid metal cooled reactor.

In alternative embodiments, the described heat exchanger may form the first heat exchanger 14 or the recuperator 28 of the sodium fast reactor plant shown in Figure 1.

The primary and secondary fluid may be selected depending on the reactor type or the relevant application, for example, the primary and secondary fluid may both be water.

## Claims

1. A plate-fin heat exchanger (20) for transferring heat from a hot low pressure fluid to a cold high pressure fluid, the heat exchanger comprising:
a plurality of heat exchange modules (32) adjacently stacked and arranged in the axial direction of the plate-fin heat exchanger, each heat exchange module comprising a plurality of plates (54) and fins (56) that define a plurality of hot fluid flow paths and a plurality of cold fluid flow paths;
a first entry manifold (36) for delivering hot fluid to each of the plurality of the hot fluid flow paths and a second entry manifold (34) for delivering cold fluid to each of the plurality of cold fluid flow paths;
a first exit manifold (37) for receiving hot fluid from each of the plurality of hot fluid flow paths and a second exit manifold (35) for receiving cold fluid from each of the plurality of cold fluid flow paths **characterised in that** the first entry manifold comprises two inlets (44) through which hot fluid can enter the heat exchanger and the first exit manifold comprises two outlets (46) through which the hot fluid can exit the heat exchanger, and **in that** the axial length (L) of the heat exchanger is at least four times the width (W) of the heat exchanger.

2. The heat exchanger according to claim 1, wherein the heat exchange modules are adjacently stacked and arranged such that the axial length of the heat exchanger is at least twice the height of the heat exchanger.

3. The heat exchanger according to claim 1 or 2, wherein each manifold extends from one axial end of the heat exchanger to the opposite axial end of the each exchanger so as to connect to each of the corresponding plurality of hot or cold fluid flow paths.

4. The heat exchanger according to any one of the previous claims, wherein one inlet is at an axial end of the first entry manifold and the other inlet is at the opposite axial end of the first entry manifold.

5. The heat exchanger according to any one of the previous claims, wherein one outlet is at an axial end of the first exit manifold and the other outlet is at the opposite axial end of the first exit manifold.

6. The heat exchanger according to any one of the previous claims, wherein the second entry manifold comprises a single inlet (38) through which cold fluid can enter the second entry manifold and the second exit manifold comprises a single outlet (40) through which the cold fluid can exit the second exit manifold.

7. The heat exchanger according to claim 6, wherein the inlet of the second entry manifold and the outlet of the second exit manifold are provided on the same axial end of the heat exchanger.

8. The heat exchanger according to any of the previous claims, wherein the cross sectional area of the second inlet manifold and/or the second outlet manifold is larger than the cross sectional area of the first inlet manifold and/or the first outlet manifold.

9. The heat exchanger according to any one of the previous claims, wherein each entry and exit manifold is accommodated partially within a region defined by the modules and extends partially outside a region defined by the modules.

10. The heat exchanger according to any one of the previous claims, wherein the entry and exit manifolds define a cylindrical tube.

11. The use of the heat exchanger according to any one of the previous claims, wherein the hot low pressure fluid is liquid sodium and the cold high pressure fluid is nitrogen gas.

12. A nuclear reactor plant (10) comprising the heat exchanger according to any one of claims 1 to 10.

13. The nuclear reactor plant according to claim 12, wherein the nuclear reactor plant is a sodium fast reactor plant.

## Patentansprüche

1. Lamellenwärmetauscher (20) zum Übertragen von Wärme von einem warmen Niederdruckfluid an ein kaltes Hochdruckfluid, wobei der Wärmetauscher Folgendes umfasst:
eine Vielzahl von Wärmetauschmodulen (32), die nebeneinander gestapelt und in axialer Richtung des Lamellenwärmetauschers angeordnet sind, wobei jedes Wärmetauschmodul eine Vielzahl von Platten (54) und Lamellen (56) umfasst, die eine Vielzahl von Strömungswegen für warmes Fluid und eine Vielzahl von Strömungswegen für kaltes Fluid definieren;
einen ersten Eingangsverteiler (36) zum Liefern von warmem Fluid an jeden der Vielzahl von Strömungswegen für warmes Fluid und einen zweiten Eingangsverteiler (34) zum Liefern von kaltem Fluid an jeden der Vielzahl von Strömungswegen für kaltes Fluid;
einen ersten Ausgangsverteiler (37) zum Empfangen von warmem Fluid aus jedem der Vielzahl von Strömungswegen für warmes Fluid und einen zweiten Ausgangsverteiler (35) zum Empfangen von kaltem Fluid aus jedem der Vielzahl von Strömungswegen für kaltes Fluid, **dadurch gekennzeichnet, dass** der erste Eingangsverteiler zwei Einlässe (44) umfasst, durch die warmes Fluid in den Wärmetauscher eintreten kann, und dass der erste Ausgangsverteiler zwei Auslässe (46) umfasst, durch die das warme Fluid den Wärmetauscher verlassen kann, und dass die axiale Länge (L) des Wärmetauschers mindestens das Vierfache der Breite (W) des Wärmetauschers umfasst.

2. Wärmetauscher nach Anspruch 1, wobei die Wärmetauschermodule nebeneinander gestapelt und so angeordnet sind, dass die axiale Länge des Wärmetauschers mindestens das Doppelte der Höhe des Wärmetauschers umfasst.

3. Wärmetauscher nach Anspruch 1 oder 2, wobei sich jeder Verteiler von einem axialen Ende des Wärmetauschers zum gegenüberliegenden axialen Ende jedes Wärmetauschers erstreckt, so dass eine Verbindung zum entsprechenden Strömungsweg der Vielzahl von Strömungswegen für warmes oder kaltes Fluid entsteht.

4. Wärmetauscher nach einem der vorstehenden Ansprüche, wobei ein Einlass sich an einem axialen Ende des ersten Eingangsverteilers befindet und der andere Einlass sich am gegenüberliegenden axialen Ende des ersten Eingangsverteilers befindet.

5. Wärmetauscher nach einem der vorstehenden Ansprüche, wobei ein Auslass sich an einem axialen Ende des ersten Ausgangsverteilers befindet und der andere Auslass sich am gegenüberliegenden axialen Ende des ersten Ausgangsverteilers befindet.

6. Wärmetauscher nach einem der vorstehenden Ansprüche, wobei der zweite Eingangsverteiler einen einzelnen Einlass (38) umfasst, durch den kaltes Fluid in den zweiten Einlassverteiler eintreten kann und der zweite Ausgangsverteiler einen einzelnen Auslass (40) umfasst, durch den das kalte Fluid den zweiten Ausgangsverteiler verlassen kann.

7. Wärmetauscher nach Anspruch 6, wobei der Einlass des zweiten Eingangsverteilers und der Auslass des zweiten Auslassverteilers am selben axialen Ende des Wärmetauschers bereitgestellt sind.

8. Wärmetauscher nach einem der vorstehenden Ansprüche, wobei die Querschnittfläche des zweiten Eingangsverteilers und/oder der zweite Ausgangsverteiler größer als die Querschnittfläche des ersten Eingangsverteilers und/oder des ersten Ausgangsverteilers ist.

9. Wärmetauscher nach einem der vorstehenden Ansprüche, wobei jeder Eingangs- und Ausgangsverteiler teilweise in einer Region untergebracht ist, die durch die Module definiert ist und sich teilweise außerhalb einer Region erstreckt, die durch die Module definiert ist.

10. Wärmetauscher nach einem der vorstehenden Ansprüche, wobei die Eingangs- und Ausgangsverteiler ein zylindrisches Rohr definieren.

11. Verwendung des Wärmetauschers nach einem der vorstehenden Ansprüche, wobei das warme Niederdruckfluid Flüssignatron und das kalte Hochdruckfluid Stickstoffgas ist.

12. Nuklearreaktoranlage (10), umfassend den Wärmetauscher nach einem der Ansprüche 1 bis 10.

13. Nuklearreaktoranlage nach Anspruch 12, wobei die Nuklearreaktoranlage eine Natrium-Schnellreaktoranlage ist.

## Revendications

1. Échangeur de chaleur à plaques-ailettes (20) pour le transfert de chaleur d'un fluide chaud basse pression à un fluide froid haute pression, l'échangeur de chaleur comprenant :
une pluralité de modules d'échange de chaleur (32) empilés de façon adjacente, et agencés dans la direction axiale de l'échangeur de chaleur à plaques-ailettes, chaque module d'échange de chaleur comprenant une pluralité de plaques (54) et d'ailettes (56) définissant une pluralité de chemins d'écoulement du fluide chaud et une pluralité de chemins d'écoulement du fluide froid ;
un premier collecteur d'entrée (36) pour le refoulement de fluide chaud à chacun de la pluralité de chemins d'écoulement du fluide chaud, et un deuxième collecteur d'entrée (34) pour le refoulement de fluide froid à chacun de la pluralité de chemins d'écoulement du fluide froid ;
un premier collecteur de sortie (37) pour la réception de fluide chaud de chacun de la pluralité de chemins d'écoulement du fluide chaud, et un deuxième collecteur de sortie (35) pour la réception de fluide froid de chacun de la pluralité de chemins d'écoulement du fluide froid ;
**caractérisé en ce que** le premier collecteur d'entrée comprend deux entrées (44) par lesquelles le fluide chaud peut s'introduire dans l'échangeur de chaleur, et le premier collecteur de sortie comprend deux sorties (46) par lesquelles le fluide chaud peut sortir de l'échangeur de chaleur, et **en ce que** la longueur axiale (L) de l'échangeur de chaleur est égale à au moins quatre fois la largeur (W) de l'échangeur de chaleur.

2. Échangeur de chaleur selon la revendication 1, les modules d'échange de chaleur étant empilés de façon adjacente, et agencés de sorte que la direction axiale de l'échangeur de chaleur soit égale à au moins le double de la hauteur de l'échangeur de chaleur.

3. Échangeur de chaleur selon la revendication 1 ou 2, chaque collecteur s'étendant d'une extrémité axiale de l'échangeur de chaleur à l'extrémité axiale opposée du chaque échangeur de chaleur, de façon à se connecter à chacun de la pluralité correspondante de chemins d'écoulement de fluide chaud ou froid.

4. Échangeur de chaleur selon une quelconque des revendications précédentes, une entrée se trouvant à une extrémité axiale du premier collecteur d'entrée, et l'autre entrée à l'extrémité axiale opposée du premier collecteur d'entrée.

5. Échangeur de chaleur selon une quelconque des revendications précédentes, une sortie se trouvant à une extrémité axiale du premier collecteur de sortie, et l'autre entrée à l'extrémité axiale opposée du premier collecteur de sortie.

6. Échangeur de chaleur selon une quelconque des revendications précédentes, le deuxième collecteur d'entrée comprenant une entrée unique (38) par laquelle du fluide froid peut s'introduire dans le deuxième collecteur d'entrée, et le deuxième collecteur de sortie comprenant une sortie unique (40) par laquelle le fluide froid peut sortir du deuxième collecteur de sortie.

7. Échangeur de chaleur selon la revendication 6, l'entrée du deuxième collecteur d'entrée et la sortie du deuxième collecteur de sortie sont placées sur la même extrémité axiale de l'échangeur de chaleur.

8. Échangeur de chaleur selon une quelconque des revendications précédentes, la surface de section transversale du deuxième collecteur d'entrée et/ou du deuxième collecteur de sortie étant supérieure à la surface de section transversale du premier collecteur d'entrée et/ou du premier collecteur de sortie.

9. Échangeur de chaleur selon une quelconque des revendications précédentes, chaque collecteur d'entrée et de sortie étant logé partiellement dans une région définie par les modules, et s'étendant partiellement hors d'une région définie par les modules.

10. Échangeur de chaleur selon une quelconque des revendications précédentes, les collecteur d'entrée et de sortie définissant un tube cylindrique.

11. Utilisation de l'échangeur de chaleur selon une quelconque des revendications précédentes, le fluide chaud basse pression étant du sodium liquide, et le fluide froid haute pression étant du gaz azote.

12. Centrale nucléaire (10) comprenant l'échangeur de chaleur selon une quelconque des revendications 1 à 10.

13. Centrale nucléaire selon la revendication 12, la centrale nucléaire étant une centrale à réacteur rapide au sodium.
